# EUROPEAN PATENT APPLICATION

(11) **EP 3 168 111 A1**
(43) Date of publication of application: **17.05.2017**
(21) Application number: 15194000.4
(22) Date of filing: 11.11.2015
(51) Int. Cl.: B61L 3/00, B60T 8/17, B61L 15/00

(54) **CONTROL SYSTEM WITH ADHESION MAP FOR RAIL VEHICLES**

(71) Applicant: KNORR-BREMSE Systeme für Schienenfahrzeuge GmbH, 80809 München (DE)
(72) Inventor: Kremer, Miklos, 1215 Budapest (HU); Komlosi, Istvan, 4225 Debrecen (HU)

(57) **Abstract**

The present invention relates to a system and method of controlling an assistance system or a break system of a rail vehicle, wherein an adhesion value of a wheel-to-rail contact of at least one wheel (19) of the rail vehicle and a current location information of the rail vehicle are determined. Then, the determined adhesion value is assigned to a railroad map based on the location information. By collection of a plurality of the assigned adhesion values at different locations, a track adhesion map or database for controlling the assistance system or the brake system is obtained.

## Description

The present invention relates to a control apparatus and method for controlling a brake system or an assistance system of a rail vehicle.

Different types of brakes are used to brake rail vehicles. In general, what are known as "adhesion-dependent" brakes are used as the normal service brakes. Adhesion-dependent brakes of this kind transmit a braking force via a contact between the wheel and the rail. However, such contact has only a limited capacity to accept braking force. The capacity to accept braking force via a wheel/rail contact is defined by adhesion between the wheel and the rail.

Traction or friction can be reduced when the rails are greasy, because of rain, oil or decomposing leaves which compact into a hard slippery lignin coating. If the braking force that can be transmitted by the adhesion is exceeded by an actuating force for braking a wheel, the wheel may begin to slide or lock up. To prevent this, brake systems of rail vehicles generally have wheel slide protection devices, which are able to reduce an actuating force for a brake when the adhesion is exceeded. Adhesion is normally expressed as a coefficient of friction (symbol "µ"). The lower the value of µ, the lower the adhesion between wheel and rail. Typical values for µ for dry rail would be at least 0.20. In wet weather, this can fall to 0.10. Under severe low adhesion conditions, the value of µ can drop below 0.03. As trains rely on the coefficient of friction between wheel and rail to stop, the level of adhesion available is critical to the rate at which the train can decelerate. Many modern trains have four or five fixed braking rates available to the driver, the lowest of which will normally achieve a deceleration rate of 0.3m/s2 and the highest a rate of at least 1.2m/s2. Although the relationship is not exact, a braking rate of 0.3m/s2 can only be achieved if the value of µ is at least 0.03. The value of µ would need to be at least 0.12 to achieve an emergency braking rate of 1.2m/s2.

The risk from adhesion-related incidents can be characterized as high in frequency but low in consequence. There have been very few accidents arising from low adhesion. However, potential exists for a serious accident to result from low adhesion conditions. Based on historical experience, although adhesion-related incidents have rarely resulted in an accident, should an accident occur, the most probable outcome is a collision if a train fails to stop at a signal. While modern rolling stock has a high standard of crashworthiness, a train collision has the potential for fatalities and injuries.

Therefore, in rail vehicle transportation, calculation methods for driving recommendations which are implemented in calculation units of an assistance system, in particular of a driver assistance system, have been developed. The driving recommendations provide the driver of the tractive unit of the rail vehicle with a recommendation as to how to control the rail vehicle in order to optimize one or more target variables. Possible target variables are, for example, punctual arrival at the destination, energy consumption on the route to be travelled on, or train longitudinal forces occurring during the travel. Input variables which are used for the calculation methods may be physical properties of the rail vehicle and, if appropriate, wagons coupled thereto, the route to be travelled on, a timetable and other operational regulations such as, for example, speed limits.

The DE 10 2012 108 395 A1 discloses an assistance system and a method for calculating such a driving recommendation by means of an assistance system incorporated in a rail vehicle, in particular in a multiple train unit or a locomotive, having a calculation unit and a data memory, in which timetable and route information about the route to be traveled, physical properties of the rail vehicle and, if appropriate, wagons attached to the latter are stored. The method comprises detecting a current position of the rail vehicle, detecting a current speed of the rail vehicle, detecting instantaneous state parameters of braking components of the rail vehicle, comparing the state parameters of the braking components with intended ranges of the state parameters of braking components that are stored in a data memory, calculating a currently available braking force of the braking components on the basis of the comparison of the state parameters of the braking components, updating the driving recommendation during the journey while taking into account the current position and speed of the rail vehicle and the currently available braking force of the braking components obtained from the comparison of the state parameters of the braking components.

It is therefore an object of the present invention to provide a control system capable of providing improved protection against adhesion-related incidents.

This object is solved by a control apparatus according to claim 1, a driver assistance system according to claim 6, a brake control system according to claim 7, a control method according to claim 9, and a computer program product according to claim 10.

Accordingly, an on-board determination of the wheel/rail adhesion (e.g. the value µ) is provided, wherein the measured value can be recorded and further processed, either by the train's WSP system itself or a driver advisory system or other assistance installed on the rail vehicle (e.g. train). The further processing includes recording of the determined adhesion value and assigning the recorded adhesion value to a railroad map, to create a comprehensive and dynamic changing track adhesion map or database which can be used by the driver assistance system to improve accuracy of driving recommendations, or by the brake control system to control brake actuators of the rail vehicle.

Optionally, the adhesion determination means may be adapted to determine the adhesion at predetermined locations where said rail vehicle is stopped, decelerated or accelerated. At these predetermined locations, knowledge of the current adhesion situation is helpful to optimize brake or acceleration control or driving recommendations. As a non-limiting examples, the predetermined locations may comprise at least one of traffic signals, railway stations and speed limits.

As another option, the apparatus may be adapted to control at least one auxiliary adhesion measurement arrangement to initiate adhesion measurements at the at least one wheel. By providing such an auxiliary adhesion measurement arrangement, adhesion determination can be controlled and initiated independent from normal braking procedures during operation of the rail vehicle. The auxiliary adhesion measurement arrangement may comprise at least one controllable auxiliary braking valve arrangement for initiating (intermediate) braking actions and at least one adhesion detector for detection adhesion based on e.g. the reaction of the at least one wheel to the braking action.

As a further option, the driver assistance system or the brake control system may comprise transmission means for transmitting track adhesion data of the track adhesion map or database to a remote train control center. Thereby, the collected track adhesion data can be used by the remote train control center in order to inform or notify other trains, e.g., on adhesion information, critical passages of low adhesion, etc.

It is noted that the above control apparatus may be implemented based on discrete hardware circuitry with discrete hardware components, an integrated chip, or an arrangement of chip modules, or based on a single processing device or chip controlled by a software routine or program stored in a memory, written on a computer readable medium, or downloaded from a network, such as the internet.

Furthermore, it shall be understood that the apparatus of claim 1, the driver assistance system of claim 6, the brake control system of claim 7, the method of claim 9, and the computer program of claim 10 may have similar and/or identical preferred embodiments, in particular, as defined in the dependent claims.

It shall further be understood that a preferred embodiment of the invention can also be any combination of the dependent claims or above embodiments with the respective independent claim.

The present invention will now be described based on embodiments with reference to the accompanying drawings in which:
- Fig. 1: shows a schematic block diagram of a rail vehicle with a control system according to a first embodiment;
- Fig. 2: shows a schematic block diagram of a control system according to a second embodiment; and
- Fig. 3: shows a flow diagram of a control procedure according to a third embodiment.

In the following, preferred embodiments of the present invention will be described on the basis of an assistance system or brake control system with an incorporated adhesion measuring and storage system for a train as an example of a rail vehicle.

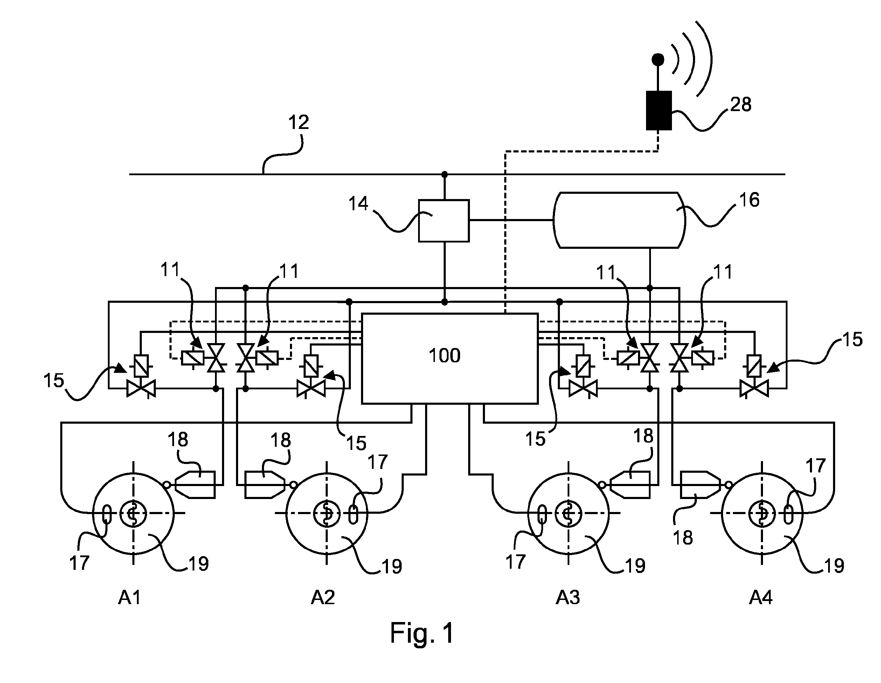

Fig. 1 shows a schematic block diagram of a train wagon with additional equipment used for on-board determining a wheel-rail adhesion value (e.g., the value µ). In the example of Fig. 1, the train wagon comprises four axles A1 to A4 with respective wheels 19. A braking force can be applied on the wheels 19 by respective pneumatically controlled braking actuators, e.g., brake cylinders 18. A pressure for controlling the brake cylinders 18 is supplied from an auxiliary reservoir 16 via a distributor 14 which is also connected to a main brake pipe 12 of the train (e.g., in case of normal train braking process).

When the special process of adhesion determination takes place (apart from the normal train braking process) the brake cylinders 18 can directly be fed from the auxiliary reservoir 16, i.e., a short period of opening at least one of the controllable valves 11 and simultaneously closing the valves of the corresponding auxiliary valve arrangements 15 (e.g. wsp valves 15) via control signals generated by a controller 100.

Additionally, detectors or detector arrangements 17 are provided at each of the wheels 19 to perform measurements required for determining a current adhesion value between the wheel 19 and the rail (not shown). The detectors 17 may comprise a wheel speed sensor, for example, which can be regarded as an adhesion detector since wheel speed data can be used to determine a wheel slip, from which it is possible to infer a lack of adhesion or, given a knowledge of the prevailing braking forces and/or actuating forces for example, an adhesion coefficient µ. As an alternative, other types of detectors may be used for determining the adhesion value, such as a conductivity detector for detecting the conductivity between the wheel 19 and the rail, a temperature detector for detecting the temperature in the vicinity of the wheel-rail contact point, and/or an optical detector for emitting light towards the rail and detecting a light component reflected at the rail surface.

The controller may be controlled by respective control software to generated control signals required for adhesion measurements, brake control and/or driver assistance.

According to the embodiments, the controller 100 generates control signals to initiate adhesion measurements at predetermined time periods or at predetermined locations. To achieve this, additional auxiliary valve arrangements 15 are provided which are pneumatically connected to the brake cylinders 18 and which can be controlled by the controller to apply temporary braking forces via the brake cylinders 18, to thereby initiate adhesion measurements. Based on the output values of the detectors or detector arrangements 17, the controller 100 can determine a current adhesion value at the time of measurement. This value is then stored in a central database and can be used by the normal brake control system for determining the brake force or by the drivers assistance system for generating driver recommendations as to how to control the rail vehicle in order to optimize driving targets, such as punctual arrival at the destination, energy consumption on the route to be travelled on, or train longitudinal forces occurring during the travel.

The exact location or time of adhesion measurements is not limited. However, advantageously it may take places at signals and/or stations and/or speed limits where the train can be stopped or decelerated or accelerated. The measured adhesion value can be recorded and further processed, either by the train's wheel slide protection (WSP) system itself, or the driver advisory system installed on the train. The further processing may include the recording of adhesion value and assigning the recorded adhesion value to a railroad map (which may be supported by a global positioning system (GPS), to create a comprehensive and dynamic changing "track adhesion" database, which can be used by train control center in order to inform or notify other trains, e.g. on adhesion information.

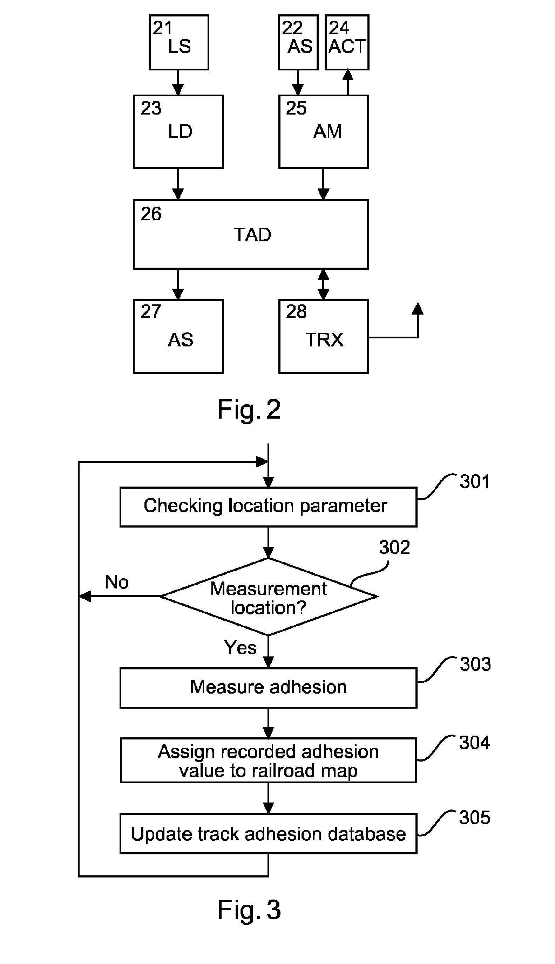

Fig. 2 shows a schematic block diagram of a driver assistance system according to a second embodiment for a train or another rail vehicle.

The actual location of the train is measured or determined by a location sensor (LS) 21 (e.g., based on GPS support, train running distance measurements, etc.). The output value of the location sensor 21 is provided to a location determination unit (LD) 23 which is adapted to calculate the actual location of the train on a stored railroad map. Additionally, an adhesion sensor (AS) 22 (such as the detector 17 of the first embodiment of Fig. 1) is provided for supplying an adhesion value to an adhesion measurement unit (AM) 25. The adhesion measurement unit 25 is adapted to supply control signals to a braking actuator (ACT) 24 (such as the auxiliary valve arrangements 15 and the brake cylinders 18 of the first embodiment of Fig. 1) in order to initiate an adhesion measurement procedure at predetermined times or locations. This procedure may comprise at least one of a temporary braking, acceleration or deceleration action in order to obtain adhesion measurement values. After initiation of such an adhesion measurement, the adhesion measurement unit 25 obtains from the adhesion sensor 22 a respective measurement value and uses this value for determining the adhesion value (e.g., the adhesion coefficient).

The determined actual adhesion value and the determined actual location are supplied to a track adhesion database (TAD) 26 which may include a processor unit for assigning the values to a track adhesion map or look-up table and storing the assigned values. The data stored in the track adhesion database can be supplied to or accessed by a driver assistance unit 27 which generates driving recommendation based on the data of the track adhesion database 26. Additionally, a transceiver unit (TRX) 28 is provided for transmitting or broadcasting data of the track adhesion database 26 to other trains or a train control center (not shown) which forwards the data to other trains for updating their own track adhesion databases or generating driving recommendations for their drivers. The transceiver unit 28 also comprises a receiver unit for receiving track adhesion data from other trains or the train control center and updating the track adhesion database 26.

Fig. 3 shows a flow diagram of a control procedure according to a third embodiment which can be implemented as a software routine for controlling a processor unit (e.g. the controller 100 of Fig. 1 or the processor unit in the track adhesion database 26 of Fig. 2) of an assistance system or a brake control system.

In a first step 301, a location parameter which indicates the actual location of the train on a railroad map is checked. Then, in step 302, it is determined whether the actual location corresponds to one of the predetermined adhesion measurement location. If not, the procedure returns to step 301 and keeps on checking the location parameter.

If a measurement location has been determined in step 302, the flow proceeds to step 303 where an adhesion measurement is initiated, e.g., as explained above in connection with the second embodiment. Then, in step 304, the measured and recorded adhesion value is assigned to a railroad map, e.g., based on the above location parameter. Finally, in step 305, the track adhesion database or map is updated by the new measured adhesion value at the corresponding track location.

Thus, an on-board determination of adhesion values and a generation of a complete track adhesion database or map is provided so as to optimize brake control and generate more accurate driver recommendations.

To summarize, an apparatus and method of controlling an assistance system or a break system of a rail vehicle have been described, wherein an adhesion value of a wheel-to-rail contact of at least one wheel of the rail vehicle and a current location information of the rail vehicle are determined. Then, the determined adhesion value is assigned to a railroad map based on the location information. By collection of a plurality of the assigned adhesion values at different locations, a track adhesion map or database for controlling the assistance system or the brake system is obtained.

It is noted that present invention is not restricted to the above preferred embodiments and can be implemented in any rail vehicle, while any known approach for measuring adhesion at the wheel-rail interface can be used.

## Claims

1. A control apparatus for controlling an assistance system or a break system of a rail vehicle, said apparatus comprising:
- adhesion determination means (25) for determining an adhesion value of a wheel-to-rail contact of at least one wheel (19) of said rail vehicle;
- location determination means (21) for determining a current location information of said rail vehicle; and
- assigning means (26) for assigning the determined adhesion value to a railroad map based on said determined location information; and
- collecting means (26) for collecting a plurality of said assigned adhesion values at different locations to obtain a track adhesion map or database for controlling said assistance system or said brake system.

2. The apparatus according to claim 1, wherein said adhesion determination means (25) is adapted to determine said adhesion at predetermined locations where said rail vehicle is stopped, decelerated or accelerated.

3. The apparatus according to claim 2, wherein said predetermined locations comprise at least one of traffic signals, railway stations and speed limits.

4. The apparatus according to any one of the preceding claims, wherein said apparatus is adapted to control at least one auxiliary adhesion measurement arrangement (11, 17) to initiate adhesion measurements at said at least one wheel (19).

5. The apparatus according to claim 4, wherein said adhesion measurement arrangement comprises at least one controllable auxiliary braking valve arrangement (11) and at least one adhesion detector (17).

6. A driver assistance system for a rail vehicle, said driver assistance system comprising said control apparatus according to any one of claims 1 to 5 and being adapted to use said track adhesion map or database to improve accuracy of calculated driving recommendation for a driver of said railway vehicle.

7. A brake control system for a rail vehicle, said brake control system comprising said control apparatus according to any one of claims 1 to 5 and being adapted to use said track adhesion map or database to control at least one brake actuator (18) of said rail vehicle.

8. The system according to claim 6 or 7, further comprising transmission means (28) for transmitting track adhesion data of said track adhesion map or database to a remote train control center.

9. A method of controlling an assistance system or a break system of a rail vehicle, said method comprising:
- determining (303) an adhesion value of a wheel-to-rail contact of at least one wheel (19) of said rail vehicle;
- determining (301) a current location information of said rail vehicle;
- assigning (304) said determined adhesion value to a railroad map based on said location information; and
- collecting (305) a plurality of said assigned adhesion values at different locations to obtain a track adhesion map or database for controlling said assistance system or said brake system.

10. A computer program product comprising code means for producing the steps of method claim 9 when run on a computer device.
